# EUROPEAN PATENT SPECIFICATION

(11) **EP 1 938 646 B1**
(45) Date of publication and mention of the grant of the patent: **01.11.2017**
(21) Application number: 06804263.9
(22) Date of filing: 29.09.2006
(51) Int. Cl.: H04W 36/00, H04W 84/02

(54) **HANDOFFS IN A WIRELESS LOCAL AREA NETWORK**
WEITERREICHUNGEN IN EINEM DRAHTLOSEN LOKALEN NETZWERK
TRANSFERTS DANS UN RESEAU LOCAL SANS FIL

(30) Priority: 30.09.2005 US 240901
(43) Date of publication of application: 02.07.2008
(73) Proprietor: Qualcomm Incorporated, San Diego, CA 92121 (US)
(72) Inventor: JAIN, Nikhil, San Diego, California 92130 (US); PRAKASH, Rajat, San Diego, CA 92121-1714 (US)
(74) Representative: Carstens, Dirk Wilhelm
(86) International application number: PCT/US2006/038108
(87) International publication number: WO 2007/041320

(56) References cited:
- EP-A- 1 565 030
- WO-A-03/107704
- US-A1- 2004 066 757
- US-A1- 2004 137 908
- US-A1- 2005 147 062

## Description

### BACKGROUND

### FIELD

The present disclosure relates generally to telecommunications, and more particularly, to systems and methods to support handoffs in a Wireless Local Area Network (WLAN).

### BACKGROUND

WLANs enable users to roam around a local geographic region while maintaining a connection to a network. Using an air interface, a wired access point may be used to plug any number of wireless devices into the network. The reach of the geographic region covered by a WLAN can be expanded by using multiple access points connected to the same network. By way of example, a number of multiple access points may be distributed within an office building to give employees a seamless network connection as they move throughout the building. WLANs may also be set up in homes allowing multiple users to access one Internet connection. The possibilities for WLANs continue to increase at astronomical rates as technology improves and cost is reduced.

A standard promulgated by the Institute of Electrical and Electronics Engineers (IEEE) called 802.11 or Wi-Fi has substantially contributed to the rapid growth of WLANs. Bluetooth and HomeRF are also WLAN technologies that have gained acceptance in the industry. Bluetooth is generally employed in smaller geographic regions than IEEE 802.11. These smaller geographic regions are generally referred to as Personal Area Networks (PANs). HomeRF, on the other hand, typically has the same geographic reach as IEEE 802.11, but is not as popular as IEEE 802.11. The emergence of these WLAN technologies, as well as others, is the direct results of increased consumer demand for wireless access to network based systems.

To achieve seamless network connectivity as a user roams throughout the WLAN, efficient methods should be employed to handoff the wireless device from one access point to another. These methods should be configured to minimize the delay between handoffs, as well as reduce the failure rate of such handoffs.

Attention is drawn to the document US 2004/0137908, which relates to a method for selecting an access point in a wireless communication system comprising mobile terminals and access points. To enable the mobile terminals to take into account the prevailing conditions within the entire coverage area of an access point more effectively than before, sets of attributes are sent from mobile terminals to the currently serving access point, each set to contain at least one attribute indicating the quality of a wireless link between the serving access point and the sending mobile terminal. Based on the sets, a service report describing current service conditions in the coverage area of the access point is formed and transmitted to at least one mobile terminal. This terminal examines the service report of at least one access point and, based on the examination, selects the access point to which a wireless link is to be established.

Furthermore attention is drawn to the document US 2004/0066757, which describes a wireless station having a wireless network device capable of providing a link-layer interface to a wireless network, a method operating at the link layer (L2) in the wireless station, and a carrier medium carrying computer readable code segments that when executed on a processor in the wireless station implement the method. The method includes, prior to the station being associated with a wireless network, wirelessly receiving L2 frames transmitted from one or more wireless access point of one or more wireless networks that the station can hear. The method further includes gathering information about the received L2 frames, including L2 information and L3 information. The L3 information includes whether an AP is sending an IP packet from a mobility agent, such that the station may associate with a wireless network that is in communication with the mobility agent. The method further includes storing information about the wireless networks that the station can hear in a database. The information stored about each wireless network includes one or more of an identifier of the wireless network, the L3 information in the L2 frame received from the AP of the wireless network, a time stamp of when the L2 frame was received from the AP, and an indication of the signal strength of the L2 frame from the AP.

Finally attention is drawn to the document US 2005/0147062, which concerns a telecommunication system including: a mobile transmitter/receiver, a number of access point, each capable of communicating with the mobile transmitter/receiver situated in a coverage area of the access point considered, and a communication network authorizing communications between said access points. The system includes at least one mobility manager capable of determining, based on operating conditions of the access points, with which access point the mobile transmitter/receiver should establish a communication. In the system according to the invention, a change in access point may not be carried out at the sole initiative of a mobile transmitter/receiver, but is, on the contrary, carried out after analysis of an environment specific to said mobile transmitter/receiver by the mobility manager.

### SUMMARY

A mobile communications device, as set forth in claim 1, and a method of handing off a mobile communications device, as set forth in claim 12, are provided. Embodiments of the invention are claimed in the dependent claims.

It is understood that other embodiments of the present invention will become readily apparent to those skilled in the art from the following detailed description, wherein it is shown and described only various embodiments of the invention by way of illustration. As will be realized, the invention is capable of other and different embodiments and its several details are capable of modification in various other respects, all without departing from scope of the present invention as defined in the appended claims. Accordingly, the drawings and detailed description are to be regarded as illustrative in nature and not as restrictive.

### BRIEF DESCRIPTION OF THE DRAWINGS

Various aspects of a wireless communications system are illustrated by way of example, and not by way of limitation, in the accompanying drawings, wherein:
FIG. 1 is a conceptual block diagram of an embodiment of a wireless communications system;
FIG. 2 is a functional block diagram illustrating an example of a mobile device capable of supporting both cellular and WLAN communications; and
FIG. 3 is a flow diagram illustrating the functionality of a processor in a mobile device.

### DETAILED DESCRIPTION

The detailed description set forth below in connection with the appended drawings is intended as a description of various embodiments of the invention and is not intended to represent the only embodiments in which the invention may be practiced. The detailed description includes specific details for the purpose of providing a thorough understanding of the invention. However, it will be apparent to those skilled in the art that the invention may be practiced without these specific details. In some instances, well known structures and components are shown in block diagram form in order to avoid obscuring the concepts of the invention.

The various techniques described herein can be implemented with a mobile communications device for a WLAN. The mobile communications device may be any suitable device capable of wireless telephony and/or data communications, such as a wireless telephone. The wireless telephone may be capable of employing any suitable protocol for accessing a WLAN, including, by way of example, IEEE 802.11, Bluetooth, Home RF, or any other WLAN protocol. While these techniques may be applicable to a wireless telephone capable of communicating with a WLAN, those skilled in the art will readily appreciate that these techniques may be extended to other mobile communication devices. For instance, these techniques may be applied to handoffs of mobile communication devices in a cellular network. CDMA2000 1x and GSM are just two examples. Alternatively, these techniques may be extended to mobile communication devices capable of communicating with multiple networks. As will be described in greater detail below, these techniques may be applied to a cellular device capable of communicating with an IEEE 802.11 network. However, any description to a cellular device with IEEE 802.11 capability is intended only to illustrate various aspects of the present invention, with the understanding that these aspects have a wide range of applications.

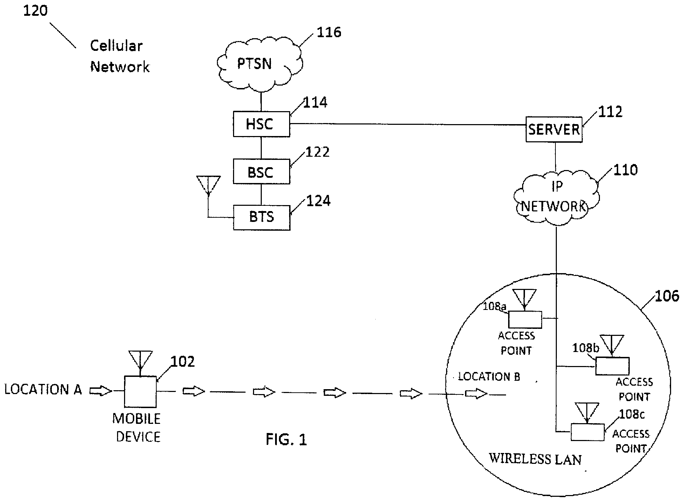

FIG. 1 is a conceptual block diagram of an embodiment of a wireless communications system. A user on a mobile device 102 is shown moving toward and into a WLAN 106 by a series of broken lines. The WLAN 106 may be used in a building that provides network connectivity to the occupants. The WLAN 106 may be an IEEE 802.11 network, or any other suitable network. The WLAN 106 includes a number of access points 108a-108c for the mobile device 102 to communicate with an IP network 110. A server 112 may be used to interface the IP network 110 to a Mobile Switching Center (MSC) 114, which provides a gateway to a Public Switched Telephone Network (PSTN) 116 for telephony applications.

While the user is outside the WLAN 106, the mobile device 102 uses a cellular Wide Area Network (WAN) 120 to support communications. The cellular WAN 120 includes a Base Station Controller (BSC) 122 supporting a number of Base Transceiver Stations (BTS) dispersed throughout the cellular coverage region. A single BTS 124 is shown in FIG. 1 for simplicity of explanation. The BSC 122 communicates with the MSC 114 to provide user access to the PSTN 112, or the IP network 110. Although not shown in FIG. 1, the cellular WAN 120 may employ numerous BSCs each supporting any number of BTSs to extend the geographic reach of the cellular WAN 116. When multiple BSCs are employed throughout the cellular WAN 120, the MSC 114 may also be used to coordinate communications between the BSCs.

The mobile device 102 may access the cellular WAN 120 by acquiring a pilot signal from the BTS 124. Once the pilot signal is acquired, a radio connection may be established between the mobile device 102 and the BTS 124 by means well known in the art. The mobile device 102 may use the radio connection with the BTS 124 to register with the MSC 114. Registration is the process by which the mobile device 102 makes its whereabouts known to the cellular WAN 120. When the registration process is complete, the mobile device 102 may enter into an idle state until a call is initiated. The call may be initiated by the mobile device 102, or received from the PSTN 116 or the IP network 110. Either way, an air traffic link may be established between the mobile device 102 and the BTS 124 to set up and support the call.

The mobile device 102 may be configured to periodically search for a beacon to locate a WLAN. A beacon is a periodic signal transmitted by each access point in a WLAN. As shown in FIG. 1, the mobile device 102 may begin to detect a beacon from one or more access points as the user approaches or enters the WLAN 106. In a manner to be described in greater detail later, the mobile device 102 selects an access point to establish a radio connection. The radio connection may be established by means well known in the art. The mobile device 102 also then obtains the IP address of the server 112. The mobile device 102 may use the services of a Domain Name Server (DNS) to determine the server's IP address. The domain name of the server 112 may be delivered to the mobile device 102 over the cellular WAN 120. With the IP address, the mobile device 102 can establish a network connection with the server 112. Once the network connection is established, the user may use the mobile device 102 to access the PSTN 116 for telephony applications or the IP network 110 for data communications.

As the user roams through the WLAN 106, the mobile device 102 may be handed off between access points 108a-108c to maintain network connectivity. The decision to handoff the mobile device 102 from one access point to another may be based on a variety of factors. In at least one embodiment of the WLAN 106, a central database may be maintained by the server 112 with service quality information relating to each access point. The service quality information may include historical information about each access point, such as the rate of dropped calls, the rate of handoff failures, and the peak traffic hours. The service quality information may also include quality metrics relating to the network connection through each access point such as the data error rate. The "data error rate" may take the form of the bit-error-rate (BER), frame-error-rate (FER), packet-error-rate, or any other error rate measurement which indicates whether information transmitted over the network connection is corrupted. The mobile device 102 may use the service quality information in conjunction with the signal strength of the beacon from each access point 108a-108c to make intelligent handoff decisions, and thereby reduce the failure rate of handoffs within the WLAN 106.

In telephony applications, the quality metrics may also include delay, jitter or packet loss over the network connection through each access point. These metrics may be a good indication of the call quality a user on a mobile device can expect to receive. By way of example, excessive delay may result in poor quality due to undesirable echoes or talker overlap. The problems with delay may be further compounded by the need to remove jitter. Jitter is the variation in the delay of packets due to network congestion, timing drift, or route changes. Lost packets can be especially problematic in telephony applications. Because IP networks do not guarantee service, they will usually exhibit a high incidence of lost packets. In IP networks, voice packets are treated the same as data. As a result, voice packets will be dropped equally with data packets when the IP network is heavily congested. Unlike data packets, however, lost voice packets cannot be simply retransmitted at a later time.

The centralized database may also be used to maintain a list of neighboring access points for each access point in the WLAN 106. Associated with each neighboring access point listed is the operating channel, i.e., frequency band. The mobile device 102 may use the list to reduce the search time for a new access point by searching only those channels where a neighboring access point is known to exist.

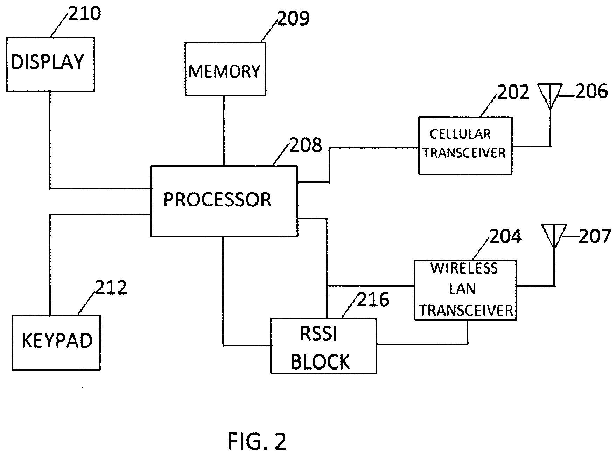

FIG. 2 is a functional block diagram illustrating an example of a mobile device capable of supporting both cellular WAN and WLAN communications. The mobile device 102 may include a cellular transceiver 202 and a WLAN transceiver 204. In at least one embodiment of the mobile device 102, the cellular transceiver 202 is capable of supporting CDMA2000 1x communications with a BTS (not shown), and the WLAN transceiver 204 is capable of supporting IEEE 802.11 communications with an access point (not shown). Those skilled in the art will readily appreciate, however, that the concepts described in connection with the mobile device 102 can be extended to other cellular and WLAN technologies, either alone or in combination with one another. By way of example, a single WLAN transceiver may be employed under processor control in a mobile device dedicated to IEEE 802.11 communications. In a cellular mobile device with IEEE 802.11 capability, each transceiver 202, 204 may have a separate antenna 206, 207, respectively, as shown, but the transceivers 202, 204 could share a single broadband antenna. Each antenna 206, 207 may be implemented with one or more radiating elements.

The mobile device 102 is also shown with a processor 208 coupled to both transceivers 202, 204, however, a separate processor may be used for each transceiver in alternative embodiments of the mobile device 102. The processor 208 may be implemented as hardware, firmware, software, or any combination thereof. By way of example, the processor 208 may include a microprocessor (not shown). The microprocessor may be used to support software applications that, among other things, (1) control and manage access to the cellular WAN and WLAN, and (2) interface the processor 208 to the keypad 210, display, 212, and other user interfaces (not shown). The processor 208 may also include a digital signal processor (DSP) (not shown) with an embedded software layer that supports various signal processing functions, such as convolutional encoding, cyclic redundancy check (CRC) functions, modulation, and spread-spectrum processing. The DSP may also perform vocoder functions to support telephony applications. The processor 208 may be a stand-alone entity or distributed across multiple entities in the mobile device 102. The manner in which the processor 208 is implemented will depend on the particular application and the design constraints imposed on the overall system. Those skilled in the art will recognize the interchangeability of hardware, firmware, and software configurations under these circumstances, and how best to implement the described functionality for each particular application.

Referring to FIGS. 1 and 2, the mobile device 102 may be configured to periodically search for a beacon from an access point in a WLAN as the user travels through the WAN 120. In one embodiment, the mobile device 102 is configured to establish a radio connection with the first access point in a WLAN it detects with sufficient beacon signal strength. If the mobile device 102 detects multiple access points as it approaches a WLAN, it may establish a network connection with the access point having the strongest beacon. The signal strength of the beacon for one or more access points in a WLAN may be determined with a Received Signal Strength Indicator (RSSI) block 216. The RSSI is most likely an existing signal that is fed back to the WLAN transceiver 204 for automatic gain control, and therefore, can be provided to the processor 208 without increasing the circuit complexity of the mobile device. Alternatively, the signal strength of the beacon from each access points may be determined by the processor 208. Since the beacon is a spread-spectrum signal that is known, *a priori,* a replica of the beacon can be stored in memory 209 at the mobile device 102. The demodulated beacon may be correlated with the replica beacon stored in memory 209 to estimate the energy of the transmitted beacon by means well known in the art.

Once a radio connection is established, the processor 208 may establish a network connection with the server 112 as described in greater detail earlier. The processor 208 may then be used to compute various quality metrics relating to the network connection in the forward direction. The term "forward direction" refers to transmissions from the server 112 to the mobile device 102, and the term "reverse direction" refers to transmissions from the mobile device 102 to the server 112. In the description of the embodiments to follow, the quality metrics may include delay, jitter, lost packets, and data rate error, but can be any type of quality metrics relating to the forward direction network connection. These metrics may be transmitted from the mobile device 102 to the server 112 over the network connection. The server 112 uses these metrics to update the information in the centralized database. In addition, the server 112 may also compute various quality metrics of its own relating to the network connection in the reverse direction, and use these metrics to further update the information in the centralized database.

The processor 208 may compute the delay across the network connection in the forward direction by any suitable means. In at least one embodiment of the WLAN 106, date and time stamps may be used with packets transmitted from the server 112 to measure delay across the network connection. More specifically, when a forward direction transmission is received by the mobile device 102, the time stamp can be extracted in the processor 208 and compared to a local clock internal (not shown) in the mobile device 102. The result, which represents the delay over the network connection in the forward direction, may be transmitted back to the server 112 to update the centralized database.

The use of time stamps to measure delay across the network connection requires that the local clock be synchronized with the server 112. A remote time source (not shown) may be used to synchronize the mobile device 102 to the server 112. The remote time source may be one of numerous servers in the IP network 110 that are synchronized to Universal Time Coordinated (UTC) via radio, satellite, modem, or other means. The remote time source may be used to provide time information to update or synchronize the internal clock in the mobile device 102. This may be achieved with a software program known as Network Time Protocol (NTP). NTP is an Internet standard protocol for synchronizing clocks to some time reference. NTP may be run in the processor 208, or elsewhere in the mobile device 102.

The processor 208 may be further configured to measure the jitter over the network connection in the forward direction as an additional quality metric. In the case of an adaptive jitter buffer, which adapts to changes in the network's delay, the delay measured by the algorithm may include network jitter, depending on where the measurement is made in the processing path. In the case of a fixed jitter buffer, which introduces a fixed delay to the packet, the processor may measure the network jitter from the variations in the delay values. In any event, the jitter value may be transmitted back to the server 112 to update the centralized database.

The processor 208 may also be used to compute a quality metric relating to lost packets by any suitable means. By way of example, packets transmitted from the server 112 can also include sequence numbers, in addition to time and date stamps. When the forward direction transmission is received by the mobile device 102, the sequence numbers can be extracted in the processor 208 and used by the algorithm. Based on the sequence numbers, the algorithm can determine which packets have been lost. The number of lost packets can be transmitted back to the server 112 to update the centralized database.

As discussed earlier, various signal processing functions may be performed by the processor 208 such as convolutional encoding, CRC functions, modulation, and spread-spectrum processing. The CRC function may also be used by the processor 208 to compute the FER by means well known in the art. The FER may be transmitted back to the server 112 to update the centralized database.

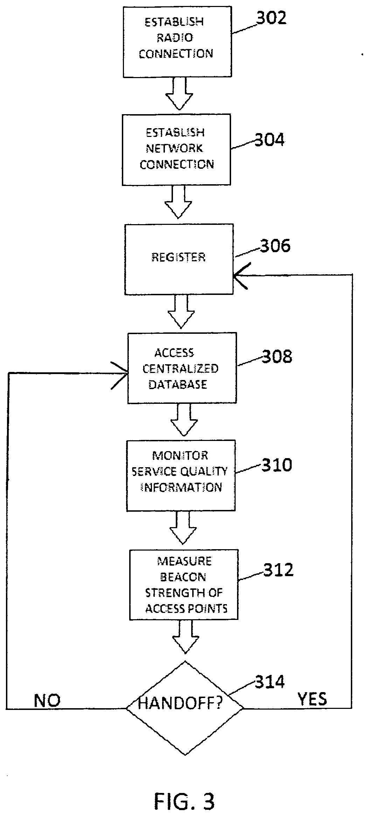

FIG. 3 is a flow diagram illustrating the functionality of the processor in managing and controlling handoffs between access points as the user roams throughout the WLAN. In step 302, the mobile device begins to detect one or more beacons from the access points as the user approaches or enters the WLAN. The signal strength of the beacons may be determined by the WLAN transceiver or the processor by means discussed in greater detail earlier. A radio connection may then be established between the WLAN transceiver and the access point with the strongest beacon. This access point will be referred to as the "base access point." Once a radio connection is established, the processor may establish a network connection with the server in step 304. The processor may also register, in step 306, with the MSC through the IP network to ensure that all calls destined for the mobile device are routed through the WLAN (see FIG. 1). If the processor is supporting an active call, then the MSC may be used to handoff the call from the WAN to the WLAN.

In step 308, the processor uses the network connection to access the database in the server to identify the access points in the neighbor list for the base access point. The access points contained in the neighbor list will be referred to as "candidate access points." In step 310, the processor continuously, or periodically, monitors the service quality information for the base and candidate access points. The service quality information may change with time as the loading, dropped call rate, and peak traffic patterns change. In addition, quality metric updates from all mobile devices using the base and candidate access points may also cause the service quality information to change with time.

In step 312, the processor measures the varying signal strength of the beacons for the base and candidate access points as the user roams through the WLAN. This may be achieved by sweeping the tuner in the WLAN transceiver through the operating frequencies of the candidate access points when the mobile device is sleeping. In the event that the processor is supporting an active call, appropriate buffering may be used at the server and the mobile device to allow the WLAN transceiver to periodically measure the beacons from the candidate access points.

In step 314, the processor determines whether or not to handoff the mobile device from the base access point to a candidate access point. The handoff decision may be based on the beacon measurements and the service quality information for the base and candidate access points. The specific algorithm used to make a handoff decision may vary. By way of example, the algorithm could be implemented to first determine the strongest beacon between the base and candidate access points. Should a candidate access point have the strongest beacon, the processor may then handoff the mobile device to that candidate access point if certain conditions are met. These conditions could be minimum threshold levels for certain quality metrics such as delay, jitter, lost packets or data error rate. Alternatively, the quality metrics for the candidate access point with the strongest beacon may be compared with the same quality metrics for the base access point, basing a handoff decision on the relative quality of the network connection between the two access points. The relative strengths of the beacons from the candidate and base access point can also be factored into the equation. The loading, dropped call rate and peak traffic patterns may also be used by the processor to determine whether to handoff the mobile. In some embodiments, the processor may handoff the mobile to a candidate access point whose beacon is not the strongest, but who can provide the highest quality network connection. The loading on a candidate access point can provide an absolute bar to handoff when it reaches a maximum threshold, or alternatively be merely a factor in the handoff decision. Peak traffic patterns may be used to make handoff decisions that more uniformly distribute the load across the WLAN. Those skilled in the art will be readily able to determine the appropriate algorithm for any particular application depending upon the performance requirements and the overall design constraints imposed on the system.

Should the processor determine that the radio connection between the mobile device and the base access point remain in tact, the algorithm loops back to step 308 to access the centralized database and continue monitoring the service quality information for the candidate access points. Alternatively, if the processor determines that the mobile device should be handed off to a candidate access point, the algorithm loops back to step 306 to register with the MSC. Through the registration process, the MSC is alerted to route all calls to the mobile device through the candidate access point once handoff is completed.

In an alternative embodiment, a centralized database of service quality information may be maintained in the memory 209 of the mobile device 102 (see FIG. 2). Returning to FIG. 1, the mobile device 102 establishes a network connection with the server 112 when the user approaches or enters the WLAN 106. Once the network connection is established, the service quality information and neighbor list for each access point may be downloaded from the server 112 to the mobile device 102. Alternatively, the neighbor list for each access point could be pre-provisioned into the mobile device 102. The mobile device 102 may use the service quality information and neighbor lists to create a centralized database to support intelligent handoff decisions within the WLAN 106.

As the mobile device 102 continues to operate with the WLAN 106, it receives from the server 112 historical information and quality metrics relating to each access point 108a-108c. The historical information may include loading, dropped call rates, and peak traffic patterns for the access points, and the quality metrics may include data error rate, delay, jitter and lost packets for the reverse direction network connection. This information may be used to update the centralized database in the mobile device 104. In addition, the mobile device 102 may also compute various quality metrics of the forward direction network connection to further update the centralized database. These quality metrics for the forward direction network connection may also be transmitted to the server 112 to be used by other mobile devices in the WLAN 106 to determine the quality of the network connection through the access point in communication with mobile device 102.

The various illustrative logical blocks, modules, circuits, elements, and/or components described in connection with the embodiments disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing components, e.g., a combination of a DSP and a microprocessor, a plurality of microprocessors, one or more microprocessors in conjunction with a DSP core, or any other such configuration.

The methods or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

## Claims

1. A mobile communications device (102) for a wireless local area network, WLAN, comprising:
means for establishing (304) a network connection ,wherein the network connection is a connection with a server through a base access point, which is an access point transmitting the strongest beacon in the WLAN as received by the mobile communications device;
means for accessing (308) a database from the mobile communications device, the database having service quality information for a plurality of access points in the WLAN (106), wherein the service quality information includes quality metrics relating to the network connection through each access point of the WLAN;
means for computing a quality metric in a forward direction, relating to the network connection, wherein the forward direction refers to transmissions from the server to the mobile communications device;
means for updating the service quality information in the database, wherein the service quality information is caused to change with time by quality metric updates from all mobile devices using the base and candidate access points;
means for monitoring (310), for the base access point and candidate access points, service quality information;
means for measuring (312) a varying signal strength of beacons transmitted by the base access point and candidate access points as a user roams through the WLAN (106); and
means for determining (314) whether to handoff the mobile communications device (102) from the base access point to one of the candidate access points and basing a handoff decision on beacon measurements and the service quality information for the base and candidate access points, wherein the means for determining further comprises
means for determining whether a candidate access point has the strongest beacon, as received by the mobile communications device, as compared to the base access point; and
means for determining, if the candidate access point has the strongest beacon, as determined by the mobile communication device, whether to handoff the mobile communications device (102) from the base access point to the strongest candidate access point based on the relative quality of the network connection between the base and the strongest candidate access point, wherein the quality metrics for the strongest candidate access point are compared with the same quality metrics for the base access point.

2. The mobile communications device (102) of claim 1, wherein said means are embodied as
a processor (208) and as a transceiver (204).

3. The mobile communications device (102) of claim 2 wherein the processor (204) is further configured to maintain a network connection with said server (112), the database being located on the server.

4. The mobile communications device (102) of claim 2 further comprising a memory (209) having the database.

5. The mobile communications device (102) of claim 2 wherein the service quality information includes delay, jitter, lost packets, or data error rate information for each of the access points.

6. The mobile communications device (102) of claim 5 wherein the processor (208) is further configured to update said delay, jitter, lost packets, or data error rate information for the base access point when the transceiver (204) has a radio connection with said base access point.

7. The mobile communications device (102) of claim 2 wherein the service quality information includes loading, dropped call rate, or peak traffic information for each of the access points.

8. The mobile communications device (102) of claim 2 wherein the database further includes a neighbor list for each of the access points, wherein the neighbor list for the base access point comprises the candidate access points.

9. The mobile communications device (102) of claim 8 wherein the processor is further configured to use the service quality information only for the access points in the neighbor list of the base access point to make a handoff decision when the transceiver has a radio connection with said base access point.

10. The mobile communications device (102) of claim 2 wherein the database includes service quality information for a plurality of access points in a second WLAN, the processor being further configured to use the service quality information to make a handoff decision from one access point in the WLAN to another access point in the second WLAN.

11. The mobile communications device (102) of claim 2 further comprising a second transceiver (202) configured to maintain a radio connection with a base station (124) in a cellular wireless area network, WAN, the processor being further configured to support communications over the radio connection.

12. A method of handing off a mobile communications device (102) between access points (108) in a WLAN (106) comprising:
establishing (304) a network connection, wherein the network connection is a connection with a server through a base access point, which is an access point transmitting the strongest beacon in the WLAN as received by the mobile communications device;
accessing (308) a database from the mobile communications device, the database having service quality information for a plurality of access points in the WLAN (106), wherein the service quality information includes quality metrics relating to the network connection;
computing a quality metric in a forward direction, relating to the network connection, wherein the forward direction refers to transmissions from the server to the mobile communications device;
updating the service quality information in the database, wherein the service quality
information is caused to change with time by quality metric updates from all mobile devices using the base and candidate access points;
monitoring (310), for the base access point and candidate access points, service quality information;
measuring (312) a varying signal strength of beacons transmitted by the base access point and candidate access points as a user roams through the WLAN (106); and
determining (314) whether to handoff the mobile communications device (102) from the base access point to one of the candidate access points and basing a handoff decision on beacon measurements and the service quality information for the base and candidate access points, wherein determining further comprises
determining whether a candidate access point has the strongest beacon, as received by the mobile communications device, as compared to the base access point; and
determining, if the candidate access point has the strongest beacon, as determined by the mobile communication device, whether to handoff the mobile communications device (102) from the base access point to the strongest candidate access point based on the relative quality of the network connection between the base and the strongest candidate access point, wherein the quality metrics for the strongest candidate access point are compared with the same quality metrics for the base access point.

13. The method of claim 12 further comprising handing off the mobile communications device from the base access point to the candidate access point.

14. The method of claim 12 further comprising maintaining a network connection with said server (112) through the base access point, and wherein the database is accessed over the network connection.

15. The method of claim 12 wherein the database resides in a memory (209) in the mobile communications device.

16. The method of claim 12 wherein the service quality information includes delay, jitter, lost packets, or data error rate information for each of the access points.

17. The method of claim 16 further comprising update said delay, jitter, lost packets, or data error rate information for the base access point while a radio connection exists with the base access point.

18. The method of claim 12 wherein the service quality information includes loading, dropped call rate, or peak traffic information for each of the access points.

19. The method of claim 12 wherein the database further includes a neighbor list for each of the access points, the neighbor list for the base access point including the candidate access points.

20. The method of claim 19 wherein the service quality information is used only for the access points in the neighbor list of the base access point when making a decision whether to handoff from the base access point to the candidate access points.

## Patentansprüche

1. Eine Mobilkommunikationseinrichtung (102) für ein drahtloses lokales Netzwerk bzw. WLAN (WLAN = wireless local area network), die Folgendes aufweist:
Mittel zum Einrichten (304) einer Netzwerkverbindung, wobei die Netzwerkverbindung eine Verbindung mit einem Server durch einen Basiszugriffspunkt ist, welcher ein Zugriffspunkt ist, der den stärksten Beacon in dem WLAN sendet, wie er von der Mobilkommunikationseinrichtung empfangen wird;
Mittel zum Zugreifen (308) auf eine Datenbank von der Mobilkommunikationseinrichtung, wobei die Datenbank Dienstqualitätsinformation für eine Vielzahl von Zugriffspunkten in dem WLAN (106) hat, wobei die Dienstqualitätsinformation Qualitätsmetriken bezüglich der Netzwerkverbindung durch jeden Zugriffspunkt des WLAN beinhaltet;
Mittel zum Berechnen einer Qualitätsmetrik in einer Vorwärtsrichtung, in Bezug auf die Netzwerkverbindung, wobei sich die Vorwärtsrichtung auf Sendungen von dem Server an die Mobilkommunikationseinrichtung bezieht;
Mittel zum Aktualisieren der Dienstqualitätsinformation in der Datenbank, wobei die Dienstqualitätsinformation veranlasst wird, sich mit der Zeit zu ändern, und zwar durch Qualitätsmetrikaktualisierungen von allen Mobileinrichtungen, die die Basis- und Kandidatenzugriffspunkte nutzen;
Mittel zum Überwachen (310), für den Basiszugriffspunkt und die Kandidatenzugriffspunkte, von Dienstqualitätsinformation;
Mittel zum Messen (312) einer variierenden Signalstärke von Beacons, die durch den Basiszugriffspunkt und die Kandidatenzugriffspunkte gesendet werden, während sich ein Nutzer durch das WLAN (106) bewegt; und
Mittel zum Bestimmen (314), ob die Mobilkommunikationseinrichtung (102) von dem Basiszugriffspunkt an einen der Kandidatenzugriffspunkte übergeben werden soll und zum Basieren einer Handoff- bzw. Übergabeentscheidung auf Beacon-Messungen und der Dienstqualitätsinformation für die Basis- und Kandidatenzugriffspunkte, wobei die Mittel zum Bestimmen weiter Folgendes aufweisen:
Mittel zum Bestimmen, ob ein Kandidatenzugriffspunkt den stärksten Beacon hat, wie er durch die Mobilkommunikationseinrichtung empfangen wird, im Vergleich zu dem Basiszugriffspunkt; und
Mittel zum Bestimmen, wenn der Kandidatenzugriffspunkt den stärksten Beacon hat, wie er durch die Mobilkommunikationseinrichtung empfangen wird, ob die Mobilkommunikationseinrichtung (102) von dem Basiszugriffspunkt an den stärksten Kandidatenzugriffspunkt übergeben werden soll basierend auf der relativen Qualität der Netzwerkverbindung zwischen dem Basiszugriffspunkt und dem stärksten Kandidatenzugriffspunkt, wobei die Qualitätsmetriken für den stärksten Kandidatenzugriffspunkt mit den gleichen Qualitätsmetriken für den Basiszugriffspunkt verglichen werden.

2. Mobilkommunikationseinrichtung (102) nach Anspruch 1, wobei die Mittel verkörpert sind als
ein Prozessor (208) und als ein Transceiver (204).

3. Mobilkommunikationseinrichtung (102) nach Anspruch 2, wobei der Prozessor (204) weiter konfiguriert ist zum Beibehalten einer Netzwerkverbindung mit dem Server (112), wobei die Datenbank auf dem Server vorliegt.

4. Mobilkommunikationseinrichtung (102) nach Anspruch 2, die weiter einen Speicher (209) mit der Datenbank aufweist.

5. Mobilkommunikationseinrichtung (102) nach Anspruch 2, wobei die Dienstqualitätsinformation Information bezüglich Verzögerung, Schwankungen bzw. Jitter, verlorenen Paketen oder Datenfehlern für jeden der Zugriffspunkte beinhaltet.

6. Mobilkommunikationseinrichtung (102) nach Anspruch 5, wobei der Prozessor (208) weiter konfiguriert ist zum Aktualisieren der Information bezüglich Verzögerung, Schwankungen bzw. Jitter, verlorenen Paketen oder Datenfehlern für den Basiszugriffspunkt, wenn der Transceiver (204) eine Funkverbindung mit dem Basiszugriffspunkt hat.

7. Mobilkommunikationseinrichtung (102) nach Anspruch 2, wobei die Dienstqualitätsinformation Information bezüglich Last, einer Rate abgebrochener bzw. fallengelassener Anrufe oder Spitzenverkehr für jeden der Zugriffspunkte beinhaltet.

8. Mobilkommunikationseinrichtung (102) nach Anspruch 2, wobei die Datenbank weiter eine Nachbarliste für jeden der Zugriffspunkte beinhaltet, wobei die Nachbarliste für den Basiszugriffspunkt die Kandidatenzugriffspunkte aufweist.

9. Mobilkommunikationseinrichtung (102) nach Anspruch 8, wobei der Prozessor weiter konfiguriert ist zum Verwenden der Dienstqualitätsinformation für nur die Zugriffspunkte in der Nachbarliste des Basiszugriffspunkts zum Treffen einer Übergabe- bzw. Handoff-Entscheidung, wenn der Transceiver eine Funkverbindung mit dem Basiszugriffspunkt hat.

10. Mobilkommunikationseinrichtung (102) nach Anspruch 2, wobei die Datenbank Dienstqualitätsinformation für eine Vielzahl von Zugriffspunkten in einem zweiten WLAN beinhaltet, wobei der Prozessor weiter konfiguriert ist zum Nutzen der Dienstqualitätsinformation zum Treffen einer Handoff- bzw. Übergabeentscheidung von einem Zugriffspunkt in dem WLAN zu einem anderen Zugriffspunkt in dem zweiten WLAN.

11. Mobilkommunikationseinrichtung (102) nach Anspruch 2, die weiter einen zweiten Transceiver (202) aufweist, der konfiguriert ist zum Beibehalten einer Funkverbindung mit einer Basisstation (124) in einem Zellen-WAN (WAN = wireless area network), wobei der Prozessor weiter konfiguriert ist zum Unterstützen von Kommunikationen über die Funkverbindung.

12. Ein Verfahren zum Übergeben bzw. Durchführen eines Handoffs bezüglich einer Mobilkommunikationseinrichtung (102) zwischen Zugriffspunkten (108) in einem WLAN (106), das Folgendes aufweist:
Einrichten (304) einer Netzwerkverbindung, wobei die Netzwerkverbindung eine Verbindung mit einem Server durch einen Basiszugriffspunkt ist, welcher ein Zugriffspunkt ist, der den stärksten Beacon in dem WLAN sendet, wie er durch die Mobilkommunikationseinrichtung empfangen wird;
Zugreifen (308) auf eine Datenbank von der Mobilkommunikationseinrichtung, wobei die Datenbank Dienstqualitätsinformation für eine Vielzahl von Zugriffspunkten in dem WLAN (106) hat, wobei die Dienstqualitätsinformation Qualitätsmetriken bezüglich der Netzwerkverbindung beinhaltet;
Berechnen einer Qualitätsmetrik in einer Vorwärtsrichtung, die sich auf die Netzwerkverbindung bezieht, wobei sich die Vorwärtsrichtung auf Sendungen von dem Server an die Mobilkommunikationseinrichtung bezieht;
Aktualisieren der Dienstqualitätsinformation in der Datenbank, wobei die Dienstqualitätsinformation veranlasst wird, sich mit der Zeit durch Qualitätsmetrikaktualisierungen von allen Mobileinrichtungen unter Verwendung der Basis- und Kandidatenzugriffspunkte zu ändern;
Überwachen (310), für den Basiszugriffspunkt und die Kandidatenzugriffspunkte, der Dienstqualitätsinformation;
Messen (312) einer variierenden Signalstärke von Beacons, die durch den Basiszugriffspunkt und die Kandidatenzugriffspunkte gesendet werden, während sich ein Nutzer durch das WLAN (106) bewegt; und
Bestimmen (314), ob die Mobilkommunikationseinrichtung (102) von dem Basiszugriffspunkt an einen der Kandidatenzugriffspunkte übergeben werden soll und Basieren einer Handoff- bzw. Übergabeentscheidung auf Beacon-Messungen und der Dienstqualitätsinformation für die Basis- und Kandidatenzugriffspunkte, wobei das Bestimmen weiter Folgendes aufweist Bestimmen, ob ein Kandidatenzugriffspunkt den stärksten Beacon hat, wie er durch die Mobilkommunikationseinrichtung empfangen wird, im Vergleich zu dem Basiszugriffspunkt; und
Bestimmen, wenn der Kandidatenzugriffspunkt den stärksten Beacon hat, wie durch die Mobilkommunikationseinrichtung bestimmt wird, ob die Mobilkommunikationseinrichtung (102) von dem Basiszugriffspunkt an den stärksten Kandidatenzugriffspunkt übergeben werden soll basierend auf der relativen Qualität der Netzwerkverbindung zwischen dem Basiszugriffspunkt und dem stärksten Kandidatenzugriffspunkt, wobei die Qualitätsmetriken für den stärksten Kandidatenzugriffspunkt mit den gleichen Qualitätsmetriken für den Basiszugriffspunkt verglichen werden.

13. Verfahren nach Anspruch 12, das weiter Übergeben der Mobilkommunikationseinrichtung von dem Basiszugriffspunkt an den Kandidatenzugriffspunkt aufweist.

14. Verfahren nach Anspruch 12, das weiter Beibehalten einer Netzwerkverbindung mit dem Server (112) durch den Basiszugriffspunkt aufweist, und wobei auf die Datenbank über die Netzwerkverbindung zugegriffen wird.

15. Verfahren nach Anspruch 12, wobei die Datenbank in einem Speicher (209) in der Mobilkommunikationseinrichtung vorliegt.

16. Verfahren nach Anspruch 12, wobei die Dienstqualitätsinformation Information hinsichtlich Verzögerung, Schwankungen bzw. Jitter, verlorenen Paketen oder Datenfehlern für jeden der Zugriffspunkte beinhaltet.

17. Verfahren nach Anspruch 16, das weiter Aktualisieren der Information hinsichtlich Verzögerung, Schwankungen bzw. Jitter, verlorenen Paketen oder Datenfehlern für den Basiszugriffspunkt aufweist, während eine Funkverbindung mit dem Basiszugriffspunkt vorliegt.

18. Verfahren nach Anspruch 12, wobei die Dienstqualitätsinformation Information hinsichtlich Last, einer Rate verlorener bzw. abgebrochener Anrufe oder Spitzenverkehr für jeden der Zugriffspunkte beinhaltet.

19. Verfahren nach Anspruch 12, wobei die Datenbank weiter eine Nachbarliste für jeden der Zugriffspunkte beinhaltet, wobei die Nachbarliste für den Basiszugriffspunkt die Kandidatenzugriffspunkte beinhaltet.

20. Verfahren nach Anspruch 19, wobei die Dienstqualitätsinformation nur für die Zugriffspunkte in der Nachbarliste des Basiszugriffspunktes verwendet wird, wenn eine Entscheidung getroffen wird, ob von dem Basiszugriffspunkt an die Kandidatenzugriffspunkte übergeben bzw. ein Handoff an diese durchgeführt werden soll.

## Revendications

1. Dispositif mobile de communication (102) pour un réseau local sans fil, WLAN , comprenant :
des moyens (304) pour établir une connexion de réseau, la connexion de réseau étant une connexion avec un serveur par l'intermédiaire d'un point d'accès de base qui est un point d'accès transmettant la balise la plus intense dans le WLAN telle que reçue par le dispositif mobile de communication ;
des moyens (308) pour accéder à une base de données à partir du dispositif mobile de communication, la base de données contenant des informations de qualité de service pour une pluralité de points d'accès du WLAN (106), dans lequel les informations de qualité de service contiennent une métrique de qualité concernant la connexion de réseau par l'intermédiaire de chaque point d'accès du WLAN ;
des moyens pour calculer une métrique de qualité dans une direction directe concernant la connexion de réseau, la direction directe concernant des transmissions du serveur au dispositif mobile de communication ;
des moyens pour mettre à jour les informations de qualité de service dans la base de données, les informations de qualité de service étant amenées à changer en fonction du temps par des mises à jour de la métrique de qualité pour tous les dispositifs mobiles, en utilisant les points d'accès de base et candidats ;
des moyens (310) pour surveiller, pour le point d'accès de base et les points d'accès candidats, les informations de qualité de service ;
des moyens (312) pour mesurer l'intensité de signal variable des balises transmises par le point d'accès de base et les points d'accès candidats tandis qu'un utilisateur navigue sur le WLAN (106) ; et
des moyens (314) pour déterminer s'il faut transférer le dispositif mobile de communication (102) du point d'accès de base à l'un des points d'accès candidats et baser une décision de transfert sur les mesures de balise et les informations de qualité de service pour les point d'accès de base et candidats, dans lequel les moyens de détermination comprennent en outre :
des moyens pour déterminer si un point d'accès candidat comporte la balise la plus intense, telle que reçue par le dispositif mobile de communication par rapport au point d'accès de base ; et
des moyens pour déterminer, si le point d'accès candidat contient la balise la plus intense, telle que déterminée par le dispositif mobile de communication, s'il faut transférer le dispositif mobile de communication (102) du point d'accès de base au point d'accès candidat le plus intense sur la base de la qualité relative de la connexion de réseau entre le point d'accès de base et le point d'accès candidat le plus intense, la métrique de qualité pour le point d'accès candidat le plus intense étant comparée à la même métrique de qualité pour le point d'accès de base.

2. Dispositif mobile de communication (102) selon la revendication 1, dans lequel lesdits moyens sont mis en oeuvre sous forme d'un processeur (208) et d'un émetteur-récepteur (204).

3. Dispositif mobile de communication (102) selon la revendication 2, dans lequel le processeur (204) est en outre configuré pour maintenir une connexion de réseau avec le serveur (112), la base de données étant localisée sur le serveur.

4. Dispositif mobile de communication (102) selon la revendication 2, comprenant en outre une mémoire (209) contenant la base de données.

5. Dispositif mobile de communication (102) selon la revendication 2, dans lequel les informations de qualité de service comprennent des informations de retard, de gigue, de paquets perdus ou de taux d'erreur de données pour chacun des points d'accès.

6. Dispositif mobile de communication (102) selon la revendication 5, dans lequel le processeur (208) est en outre configure pour mettre à jour les informations de retard, de gigue, de paquets perdus ou de taux d'erreur de données pour le point d'accès de base quand l'émetteur-récepteur (204) est en connexion radio avec le point d'accès de base.

7. Dispositif mobile de communication (102) selon la revendication 2, dans lequel les informations de qualité de service contiennent des informations de chargement, de taux d'appels manqués ou de pics de trafic pour chacun des points d'accès.

8. Dispositif mobile de communication (102) selon la revendication 2, dans lequel la base de données contient en outre une liste de voisins pour chacun des points d'accès, la liste de voisins pour le point d'accès de base comprenant les points d'accès candidats.

9. Dispositif mobile de communication (102) selon la revendication 8, dans lequel le processeur est en outre configuré pour utiliser les informations de qualité de service seulement pour les points d'accès dans la liste de voisins du point d'accès de base pour établir une décision de transfert quand l'émetteur-récepteur a une connexion radio avec le point d'accès de base.

10. Dispositif mobile de communication (102) selon la revendication 2, dans lequel la base de données contient des informations de qualité de service pour une pluralité de points d'accès dans un second WLAN, le processeur étant en outre agencé pour utiliser les informations de qualité de service pour établir une décision de transfert d'un point d'accès du WLAN à un autre point d'accès dans le second WLAN.

11. Dispositif mobile de communication (102) selon la revendication 2, comprenant en outre un second émetteur-récepteur (202) agencé pour maintenir une connexion radio avec une station de base (124) dans un cellulaire réseau sans fil, WAN, le processeur étant en outre agencé pour permettre des communications sur la connexion radio.

12. Procédé de transfert d'un dispositif mobile de communication (102) entre des points d'accès (108) dans un WLAN (106) comprenant :
établir (304)une connexion de réseau, la connexion de réseau étant une connexion avec un serveur par l'intermédiaire d'un point d'accès de base qui est un point d'accès transmettant la balise la plus intense dans le WLAN telle que reçue par le dispositif mobile de communication ;
accéder (308) à une base de données à partir du dispositif mobile de communication, la base de données contenant des informations de qualité de service pour une pluralité de points d'accès du WLAN (106), dans lequel les informations de qualité de service comprennent une métrique de qualité concernant la connexion de réseau;
calculer une métrique de qualité dans une direction directe concernant la connexion de réseau, la direction directe concernant des transmissions du serveur au dispositif mobile de communication ;
mettre à jour les informations de qualité de service dans la base de données, les informations de qualité de service étant amenées à changer en fonction du temps par des mises à jour de la métrique de qualité pour tous les dispositifs mobiles, en utilisant les points d'accès de base et candidats ;
surveiller(310),pour le point d'accès de base et les points d'accès candidats, les informations de qualité de service ;
mesurer(312) l'intensité de signal variable des balises transmises par le point d'accès de base et les points d'accès candidats tandis qu'un utilisateur navigue sur le WLAN (106); et
déterminer (314) s'il faut transférerle dispositif mobile de communication (102) du point d'accès de base à l'un des points d'accès candidats et baser une décision de transfert sur les mesures de balise et les informations de qualité de service pour les point d'accès de base et candidats, dans lequel la détermination comprend en outre :
déterminer si un point d'accès candidat comporte la balise la plus intense, telle que reçue par le dispositif mobile de communication par rapport au point d'accès de base ; et
déterminer, si le point d'accès candidat contient la balise la plus intense, telle que déterminée par le dispositif mobile de communication, s'il faut transférer le dispositif mobile de communication (102) du point d'accès de base au point d'accès candidat le plus intense sur la base de la qualité relative de la connexion de réseau entre le point d'accès de base et le point d'accès candidat le plus intense, la métrique de qualité pour le point d'accès candidat le plus intense étant comparée à la même métrique de qualité pour le point d'accès de base.

13. Procédé selon la revendication 12, comprenant en outre le transfert du dispositif mobile de communication du point d'accès de base au point d'accès candidat.

14. Procédé selon la revendication 12, comprenant en outre le maintien d'une connexion de réseau avec le serveur (112) par l'intermédiaire du point d'accès de base, et dans lequel on accède à la base de données par la connexion de réseau.

15. Procédé selon la revendication 12, dans lequel la base de données réside dans une mémoire (209) dans le dispositif mobile de communication.

16. Procédé selon la revendication 12, dans lequel les informations de qualité de service comprennent des informations de retard, de gigue, de paquets perdus ou de taux d'erreur de données pour chacun des points d'accès.

17. Procédé selon la revendication 16, comprenant la mise à jour des informations de retard, de gigue, de paquets perdus ou de taux d'erreur de données pour le point d'accès de base quand une connexion radio existe avec le point d'accès de base.

18. Procédé selon la revendication 12, dans lequel les informations de qualité de service contiennent des informations de chargement, de taux d'appels manqués ou de pics de trafic pour chacun des points d'accès.

19. Procédé selon la revendication 12, dans lequel la base de données comprend en outre une liste de voisins pour chacun des points d'accès, la liste de voisins pour le point d'accès de base contenant les points d'accès candidats.

20. Procédé selon la revendication 19, dans lequel les informations de qualité de service sont utilisées seulement pour les points d'accès de la liste de voisins du point d'accès de base quand on établit une décision de ce qu'il faut effectuer un transfert du point d'accès de base aux points d'accès candidats.
